# EUROPEAN PATENT SPECIFICATION

(11) **EP 4 362 481 B1**
(45) Date of publication and mention of the grant of the patent: **09.09.2026**
(21) Application number: 22853266.9
(22) Date of filing: 29.06.2022
(51) Int. Cl.: G06V 10/26, G06V 40/16, H04N 23/60, H04N 23/45, H04N 21/475, H04N 21/4415, H04M 1/02, G06T 3/60, H04N 23/63

(54) **METHOD FOR DISPLAYING GUIDE FOR POSITION OF CAMERA, AND ELECTRONIC DEVICE**
VERFAHREN ZUR ANZEIGE EINER FÜHRUNG ZUR POSITION EINER KAMERA UND ELEKTRONISCHE VORRICHTUNG
PROCÉDÉ D'AFFICHAGE DE GUIDE POUR LA POSITION D'UNE CAMÉRA, ET DISPOSITIF ÉLECTRONIQUE

(30) Priority: 06.08.2021 KR 20210103635
(43) Date of publication of application: 01.05.2024
(73) Proprietor: Samsung Electronics Co., Ltd., Suwon-si, Gyeonggi-do 16677 (KR)
(72) Inventor: JANG, Wonsuk, Suwon-si, Gyeonggi-do 16677 (KR); YOO, Juwoan, Suwon-si, Gyeonggi-do 16677 (KR); LEE, Dasom, Suwon-si, Gyeonggi-do 16677 (KR)
(74) Representative: HGF
(86) International application number: PCT/KR2022/009331
(87) International publication number: WO 2023/013887

(56) References cited:
- JP-A- 2006 020 112
- KR-A- 20120 002 106
- KR-A- 20150 076 371
- KR-A- 20150 111 199
- KR-A- 20150 111 199
- KR-A- 20180 136 776
- US-B2- 11 076 080

## Description

### [Technical Field]

Various embodiments of the disclosure relate to a method and an electronic device for displaying a guide for the position of a camera.

### [Background Art]

Electronic devices, such as portable electronic devices, are available in various sizes depending on their functions and user preferences. Electronic devices may include a large-screen touch display to ensure wide visibility and improve convenience of manipulation. The electronic device may include, as an optical module, at least one camera module disposed under a display in an inner space thereof. At least one camera module may be disposed below the display to photograph an external subject through at least a portion of the display. The electronic device may display a screen through the display and simultaneously photograph an external subject using at least one camera module.

KR 20150111199 A discusses a mobile terminal having a camera formed on a main body, and a method for controlling the same. US 11076080 B2 discusses a method for eye tracking.

### [Disclosure of Invention]

### [Technical Problem]

The electronic device may include a display that is visible from the outside through at least a portion of a cover member (e.g., a front plate, window, or front cover). In order to meet the demand for a large screen, the display may be implemented to be visually exposed through substantially the entire area of the cover member (e.g., a front cover). The display may expand a screen display area. As the screen display area of the display expands, the arrangement structure of various electronic components, for example, at least one camera module, disposed through the cover member may also vary according thereto. For example, in case that the camera module is disposed in an area (e.g., a black matrix (BM) area or an inactive area) other than the display area of the cover member, the expansion of the display area may be limited.

To solve this problem, the camera module may be disposed under the display (e.g., an under-display camera (UDC) structure), and the display panel may be configured to have a transmittance enabling the operation of the camera module by lowering the arrangement density of pixels and/or electric wires in the display area corresponding to the lens of the camera module.

Various embodiments of the disclosure may identify whether or not foreign substances are attached to the display area corresponding to the position of the camera and display a guide for removing the identified foreign substances from the display. Various embodiments may provide a method and an electronic device for displaying a guide for the position of the camera on the display.

### [Solution to Problem]

The scope of protection of the present invention is defined by the appended independent claims. Optional features are specified by the dependent claims.

### [Advantageous Effects of Invention]

Various embodiments of the disclosure may enable identifying whether or not foreign substances are attached to the display area corresponding to the lens of at least one camera (e.g., an under-display camera (UDC)) disposed on the back side of the display module and displaying a guide for removing the foreign substances from the display area. When displaying a user interface, an electronic device may display the user interface reflecting graphic effects (e.g., blur, shift, rotate, and twist), based on the display area of the display module corresponding to the position of the camera lens. The user may intuitively identify the graphic effects of the user interface and quickly remove foreign substances from the display area. In addition, various effects that may be directly or indirectly identified through this document may be provided.

### [Brief Description of Drawings]

In connection with the description of the drawings, identical or similar reference numerals may be used for identical or similar components.
FIG. 1 is a block diagram of an electronic device in a network environment according to various embodiments of the disclosure.
FIG. 2 is a diagram illustrating an example of at least one camera (e.g., an under-display camera (UDC)) disposed under a display module according to various embodiments of the disclosure.
FIG. 3 is a block diagram of an electronic device according to various embodiments of the disclosure.
FIG. 4 is a flowchart illustrating a method of displaying guide information on a display area of a display module according to various embodiments of the disclosure.
FIG. 5 is a flowchart illustrating a method of displaying a guide for the display area corresponding to the position of a camera lens according to various embodiments of the disclosure.
FIG. 6 is a flowchart illustrating a method of identifying contamination, based on the blur level of a display area, according to various embodiments of the disclosure.
FIG. 7 is a diagram illustrating an example of a table for determining the blur level according to various embodiments of the disclosure.
FIG. 8A is a diagram illustrating an example of a user interface reflecting a blur effect in the display area according to various embodiments of the disclosure.
FIG. 8B is a diagram illustrating an example of a user interface reflecting a shift effect in the display area according to various embodiments of the disclosure.
FIG. 8C is a diagram illustrating an example of a user interface reflecting a rotate effect in the display area according to various embodiments of the disclosure.

### [Mode for the Invention]

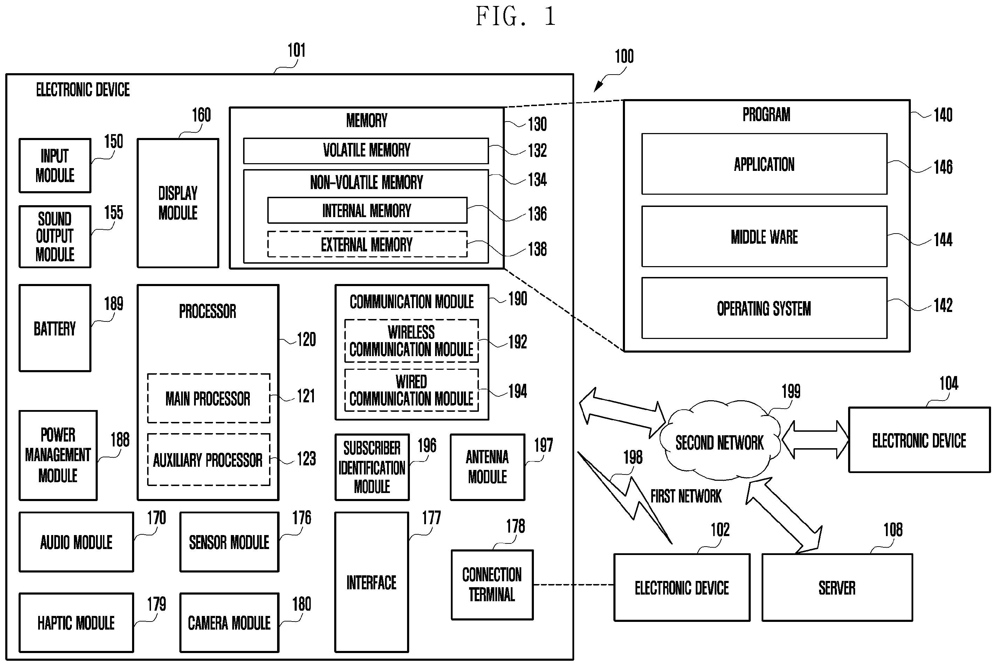

FIG. 1 illustrates a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

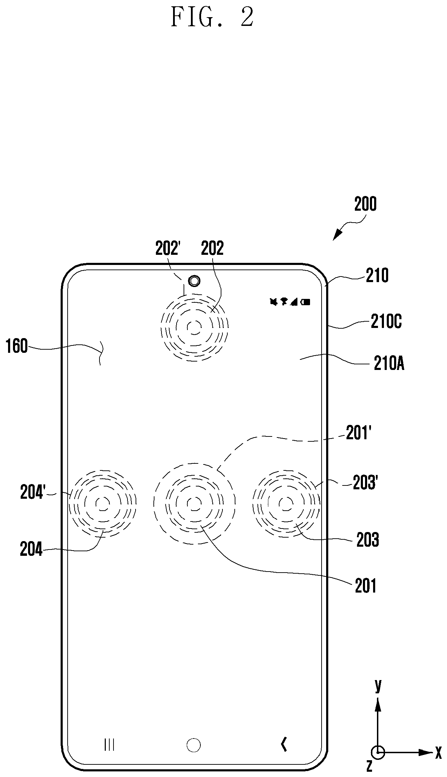

FIG. 2 is a diagram illustrating an example of at least one camera (e.g., an under-display camera (UDC)) disposed under a display module according to various embodiments of the disclosure.

According to various embodiments, an electronic device 200 (e.g., the electronic device 101 in FIG. 1) may store, as software, at least one program (e.g., the program 140 in FIG. 1) in a memory (e.g., the memory 130 in FIG. 1). For example, at least one program 140 may include at least one application (e.g., the application 146 in FIG. 1). The application 146 may be defined as application software developed to perform a specific task and may provide various functions to the user so that the user may efficiently perform the specific task. For example, a user authentication application is an application for verifying the identity of a user using the electronic device 200, and may perform a user authentication function, based on encrypted information (e.g., passwords, pattern information, and/or biometric information (e.g., fingerprint information or face information)). According to an embodiment, the electronic device 200 may be encrypted by the user, and when a display module (e.g., the display module 160 in FIG. 1) is activated in the encrypted electronic device 200, a lock screen may be displayed. According to an embodiment, the electronic device 200 may execute a user authentication application to unlock the lock screen and, in case that it is identified that the user is a registered user, unlock the lock screen.

According to an embodiment, when performing a user authentication function, the electronic device 200 may obtain a user face image using at least one camera (e.g., an under-display camera (UDC)) and perform the user authentication function, based on obtained face image. For example, when registering a user, the electronic device 200 may obtain a first image (e.g., a face template) including a user face using the camera and store the first image in the memory 130. For example, the electronic device 200 may extract at least one face feature, based on the first image including the user face, and obtain authentication data by processing the extracted face feature. The electronic device 200 may store the authentication data, as a database (DB), in the memory 130. When the user authentication function is performed, the electronic device 200 may obtain a second image (e.g., a face sample) including the user face at the current time and compare and/or analyze the same with the first image stored in the memory 130. For example, the electronic device 200 may extract at least one face feature, based on the second image, and compare and analyze the extracted face feature with authentication data stored in the memory 130, thereby performing the user authentication function. The electronic device 200 may perform the user authentication function, based on the first image and the second image.

Referring to FIG. 2, the electronic device 200 may include a housing 210 including a first surface (or front surface) 210A, a second surface (or back surface) (not shown), and a side surface 210C surrounding a space between the first surface 210A and the second surface (back surface). The electronic device 200 may have a display module 160 disposed corresponding to the first surface 210A and display at least one piece of content (e.g., a user interface) through the display module 160.

According to an embodiment, the display module 160 may include, for example, a liquid crystal display (LCD), a light-emitting diode (LED) display, an organic light-emitting diode (OLED) display, a microelectromechanical systems (MEMS) display, and/or electronic paper. The electronic device 200 may display at least one piece of content (e.g., text, images, videos, icons, and/or symbols) through the display module 160. The display module 160 may include a touchscreen and receive, for example, an electronic pen input, and a touch input, a gesture input, a proximity input, and/or a hovering input using a part of the user's body. The display module 160 may include a glass cover (window panel) and/or various layers exposed to the outside.

According to an embodiment, the display module 160 may be disposed so as to occupy the entirety (bezel-less) or most of the front surface 210A (e.g., a main screen, a surface on which primary content is displayed, or a surface on which an active area is disposed) of the electronic device 200. The display module 160 may be implemented so as to expand to the side surface 210C (e.g., up/down/left/right) of the electronic device 200.

Referring to FIG. 2, the electronic device 200 may include at least one camera 201, 202, 203, or 204 (e.g., the camera module 180 in FIG. 1 or an under-display camera (UDC)) disposed under the display module 160. For example, the at least one camera may include a first camera 201, a second camera 202, a third camera 203, and/or a fourth camera 204. The first camera 201 may be disposed at the center of the front surface 210A of the electronic device 200, and the second camera 202, the third camera 203, and/or the fourth camera 204 may be disposed away from the center of the front surface 210A of the electronic device 200 toward one side. Although FIG. 2 shows at least one camera 201, 202, 203, or 204 arranged under the display module 160, the types of the arranged cameras, the positions of the cameras, and the number of cameras are not limited. The housing 210 of the electronic device 200 may include an inner space for placing at least one camera, and at least one camera may be disposed in the inner space.

Referring to FIG. 2, at least one camera 201, 202, 203, or 204 may be disposed to be at least partially exposed to the outside through the display module 160. For example, at least one camera 201, 202, 203, or 204 may be disposed in contact with the external environment through a transmission area 201', 202', 203', or 204' at least partially implemented on the front side 210A of the display module 160. According to an embodiment, the area (e.g., a first transmission area 201', a second transmission area 202', a third transmission area 203', and/or a fourth transmission area 204') where the display module 160 and at least one camera 201, 202, 203, or 204 face each other is part of an area (e.g., a display area) that displays content and may be formed to have a certain transmittance. For example, the transmission area may be formed to have a transmittance ranging from about 5% to about 20%. This transmission area may include an area overlapping the effective aperture (e.g., angle of view or camera lens area) of the camera module through which light, which is sensed by an image sensor, for generating an image passes. For example, the transmission areas 201', 202', 203', and 204' of the display module 160 may include an area having a lower density of pixels than the surrounding areas. For example, the transmission area 201', 202', 203', and 204' may replace an opening through which at least one camera 201, 202, 203, or 204 is exposed to the outside. According to an embodiment, the transmission areas 201', 202', 203', and 204' may be formed corresponding to the lens position of at least one camera 201, 202, 203, or 204 and may be at least partially included in a partial area (e.g., a display area) of the display module 160.

According to an embodiment, the electronic device 200 may at least partially photograph an external subject, based on at least one camera 201, 202, 203, or 204, while displaying a user interface through the display module 160. For example, at least one camera 201, 202, 203, or 204 may be assigned respective ID (identification) information and may photograph the subject at various angles. For example, when the first image is captured using the first camera 201, the first image may include ID information of the first camera 201. According to an embodiment, in case that the subject includes a user face, the electronic device 200 may extract at least one face feature, based on the user face, and produce a face template, based on the extracted face feature. For example, the face template may include face features and at least one piece of additional information (e.g., camera ID information, blur level information, and/or surrounding environment information). The electronic device 200 may compare and analyze the produced face template with a face template (e.g., a reference template) previously stored as a DB in the memory 130 and identify whether or not the display module 160 is at least partially contaminated. For example, the reference template and the face template, which are compared to each other, may be produced based on a face image captured using a camera with the same ID information. For example, a reference template corresponding to the first camera 201 may be compared with a face template produced using the first camera 201, thereby determining whether or not a first display area corresponding to the lens position of the first camera 201 is contaminated.

According to an embodiment, the electronic device 200 may store a face template (e.g., a reference template) corresponding to at least one camera (e.g., the first camera 201, the second camera 202, the third camera 203, and the fourth camera 204) in the memory 130 in the form of a DB (database). For example, the electronic device 200 may store, in the memory 130, a first reference template captured using the first camera 201, a second reference template captured using the second camera 202, a third reference template captured using the third camera 203, and a fourth reference template captured using the fourth camera 204 in the form of a DB. According to an embodiment, in response to performing the user authentication function, the electronic device 200 may produce a first face template using the first camera 201 and compare and analyze the first face template and the first reference template among the reference templates stored in the memory 130. The electronic device 200 may identify whether or not the first display area corresponding to the lens position of the first camera 201 is contaminated based on the first face template and the first reference template. For example, the first display area of the display module 160 may receive frequent touch inputs from the user and may be contaminated by finger prints and foreign substances (e.g., dust). According to an embodiment, the electronic device 200 may identify whether or not the first display area is contaminated based on the first face template and the first reference template.

According to an embodiment, the display module 160 of the electronic device 200 may include a touchscreen display and receive frequent user's touch inputs based on the display module 160. Since at least one camera 201, 202, 203, or 204 is positioned on the back side of the display module 160, the user's touch input may occur frequently in the display area corresponding to the lens position of the camera, thereby increasing the level of contamination in the display area. The electronic device 200 may identify whether or not the display area (e.g., the display area corresponding to the lens position of the camera) is contaminated and apply graphic effects (e.g., blur, shift, rotate, and twist) to the display area. According to an embodiment, the electronic device 200 may display a user interface reflecting graphic effects in order to remove the user's fingerprints and foreign substances from the display area of the display module 160.

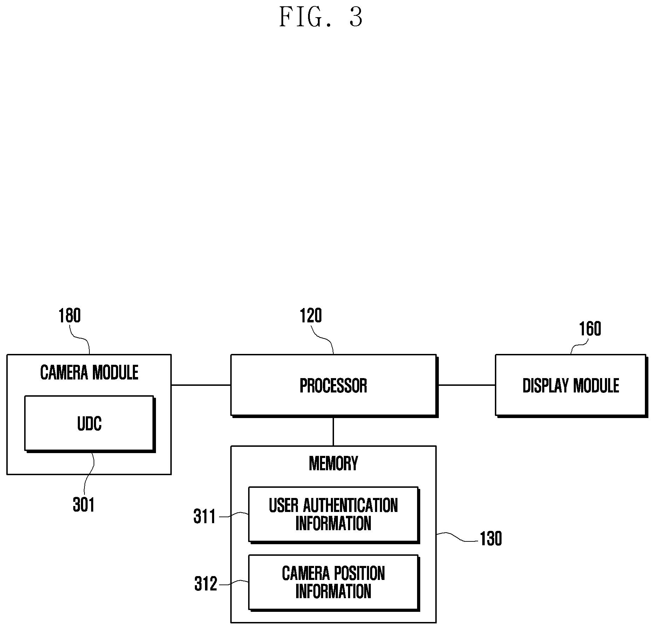

FIG. 3 is a block diagram of an electronic device according to various embodiments of the disclosure.

Referring to FIG. 3, an electronic device 200 (e.g., the electronic device 101 in FIG. 1) may include a processor (e.g., the processor 120 in FIG. 1), a memory (e.g., the memory 130 in FIG. 1), a display module (e.g., the display module 160 in FIG. 1), and/or a camera module (e.g., the camera module 180 in FIG. 1). The camera module 180 may include an under-display camera (UDC), and the memory 130 may store user authentication information 311 and camera position information 312.

According to an embodiment, the electronic device 200 may perform a user authentication function, based on an image including the user's face, which is captured using the camera module 180. The camera module 180 may include an under-display camera (UDC) 301 disposed on the back side of the display module 160. According to an embodiment, since the UDC 301 is positioned on the back side of the display module 160 (e.g., a touchscreen display), the user's touch inputs may occur frequently in the display area corresponding to the lens position of the UDC 301. The user's touch inputs may increase the level of contamination of the display area. According to an embodiment, the UDC 301 is positioned on the back side of the display module 160, so it may be difficult to visually distinguish the position where the UDC 301 is disposed. According to an embodiment, the electronic device 200 may apply graphic effects (e.g., blur, shift, rotate, and twist) to the user interface displayed through the display module 160 in order to visually identify the position where the UDC 301 is disposed. According to an embodiment, the electronic device 160 may store camera position information 312 (e.g., information related to the position where the UDC 301 is disposed or coordinate information) in the memory 130.

According to an embodiment, the electronic device 200 may store user face-related information (e.g., user authentication information 311) in the memory 130 and, based on the face-related information, analyze images captured using the camera module 180. The memory 130 may store a variety of data (e.g., face templates or reference templates) for performing the user authentication function. For example, the processor 120 of the electronic device 200 may capture an image including a user face using at least one camera included in the camera module 180 and extract face features, based on the image. The processor 120 may produce a face template, based on the extracted face features, and store the face template as a reference template in the memory 130. For example, the face template may include face features and at least one piece of additional information (e.g., camera ID information, blur level information, and/or surrounding environment information). According to an embodiment, the reference template may be stored in the memory 130 in the form of a DB (database), and may be used as an object to be compared with user authentication when performing the user authentication function. According to an embodiment, the processor 120 separately store a first reference template corresponding to the first image captured using the first camera and a second reference template corresponding to the second image captured using the second camera in the memory 130. For example, the first reference template may include ID information of the first camera, information about the blur level of the display area corresponding to the lens position of the first camera, and/or surrounding environment information (e.g., illuminance information, brightness information, and/or saturation information). According to an embodiment, the processor 120 may compare the reference template and the face template corresponding to each camera and may identify whether or not there are foreign substances in the display module 160 (e.g., the display area corresponding to the lens position of the camera). According to an embodiment, the electronic device 200 may perform an encryption operation when storing the user authentication information 311, the reference template, and/or the face template in the memory 130, and store the encrypted information in the memory 130. According to an embodiment, in case that the user authentication is successful, the electronic device 200 may at least partially update the user authentication information 311 and the reference template. For example, in case that user authentication is successful, the electronic device 200 may include the face template at least partially in the reference template, or the reference template may be at least partially replaced by the face template.

According to an embodiment, the electronic device 200 may store information related to the position where at least one camera is disposed (e.g., information about the display area corresponding to the lens position of the camera or the camera position information 312) in the memory 130. According to an embodiment, the processor 120 may identify the presence of foreign substances (e.g., a blur level) in the display area corresponding to the lens position of the camera and, in case that the foreign substances exist, apply graphic effects for the corresponding display area, based on the camera position information 312. For example, the processor 120 may compare a reference template and a face template captured using the first camera and identify whether or not foreign substances exist in the first display area corresponding to the lens position of the first camera. In case that foreign substances exist in the first display area, the processor 120 may apply graphic effects (e.g., blur, shift, rotate, and/or twist) corresponding to the first display area in order to remove the foreign substances therefrom. For example, while a user interface is being displayed through the display module 160, the processor 120 may apply graphic effects corresponding to the first display area where foreign substances exist and display the same. According to an embodiment, the electronic device 200 may identify whether or not foreign substances exist based on the display area corresponding to the lens position of at least one camera. In case that foreign substances exist in the display area, the electronic device 200 may apply graphic effects corresponding to the display area and display the same so that the user may identify and remove the foreign substances.

According to an embodiment, the camera module 180 may include various types of cameras (e.g., wide-angle cameras and/or narrow-angle cameras) and, like the UDC 301, may be disposed on the back side of the display module 160. For example, at least one camera may be disposed on the back side of the display module 160, and each camera may be assigned unique camera ID information. For example, when the electronic device 200 captures an image using the camera, the electronic device 200 may produce the image such that the image includes the camera ID information.

According to an embodiment, the display module 160 may be implemented with at least one pixel disposed based on a configured interval and position. The display module 160 may turn on or off at least one pixel. For example, the display module 160 may at least partially control pixels corresponding to at least a partial area (e.g., an area corresponding to the position where at least one camera lens is disposed or a display area). For example, in case that the first camera is activated, the processor 120 may turn on or off pixels in the first display area of the display module 160, corresponding to the lens position of the first camera. For example, when the pixels for the first display area (e.g., the first display area of the display module 160) corresponding to the position where the first camera is disposed are in the off state, the processor 120 may capture high-quality images using the first camera. When the pixels for the first display area (e.g., the first display area of the display module 160) corresponding to the position where the first camera is disposed are in the on state, the processor 120 may capture low-quality images using the first camera. According to an embodiment, the processor 120 may compare a reference template and a face template produced using the first camera, based on the first display area, and detect foreign substances from the first display area. According to an embodiment, when foreign substances exist in the first display area, the processor 120 may apply graphic effects, based on the first display area, to the user interface. For example, since there are foreign substances in the first display area, the processor 120 may provide guidance to the user to remove the foreign substances from the first display area.

According to various embodiments, an electronic device 101 or 200 may include a display module 160, at least one camera 201, 202, 203, or 204 disposed on the back side of the display module 160, a memory 130 storing information related to user authentication, and a processor 120 operatively connected to the display module 160, the at least one camera 201, 202, 203, or 204, and the memory 130. The processor 120 may execute a function for user authentication, activate the at least one camera 201, 202, 203, or 204 in response to the execution, identify whether or not a display area of the display module 160 corresponding to a position of the at least one camera is contaminated, and display guide information corresponding to the display area in case that contamination of the display area is identified.

According to an embodiment, the processor 120 may identify a lens position of a first camera included in the at least one camera, based on camera position information 312 stored in the memory 130, identify a first display area of the display module 160 corresponding to the lens position of the first camera, and identify whether or not the first display area is contaminated.

According to an embodiment, the processor 120 may obtain an image including a user face using the at least one camera, extract at least one face feature, based on the obtained image, and produce at least one template, based on the at least one extracted face feature.

According to an embodiment, the processor 120 may execute the function for user authentication in the state in which a reference template produced based on a first image including the user face is stored in the memory 130, obtain a second image including the user face in response to the execution, extract at least one face feature, based on the obtained second image, produce a face template, based on the at least one extracted face feature, and execute the function for user authentication, based on the reference template and the face template.

According to an embodiment, the processor 120 may calculate a first blur value corresponding to the reference template, calculate a second blur value corresponding to the face template, and identify whether or not the display area is contaminated based on the first blur value and the second blur value.

According to an embodiment, the processor 120 may calculate a blur ratio, based on the first blur value and the second blur value, and identify that the display area is contaminated in case that the blur ratio exceeds a configured threshold.

According to an embodiment, the processor 120 may identify whether or not the user face moves or calculate an illumination value for the user face, based on the second image, and identify whether or not the display area is contaminated based on the reference template and the face template in case that the user face does not move or in case that the illumination value exceeds a threshold.

According to an embodiment, the processor 120 may apply graphic effects to at least one piece of content included in the display area in case that contamination of the display area is identified.

According to an embodiment, the processor 120 may modify the at least one piece of content by applying a blur effect thereto, display the at least one piece of content by at least partially shifting the same, or display the at least one piece of content by at least partially rotating the same.

According to an embodiment, the processor 120 may identify the degree of contamination of the display area, and determine the degree of applying the graphic effects, based on the identified degree of contamination.

According to an embodiment, the processor 120 may detect a user's touch input onto the guide information displayed on the display area and remove the guide information from the display area in response to the detection.

According to an embodiment, the processor 120 may obtain an image through the display area of the display module 160 using the at least one activated camera and identify whether or not the display area is contaminated by calculating a blur level of the obtained image.

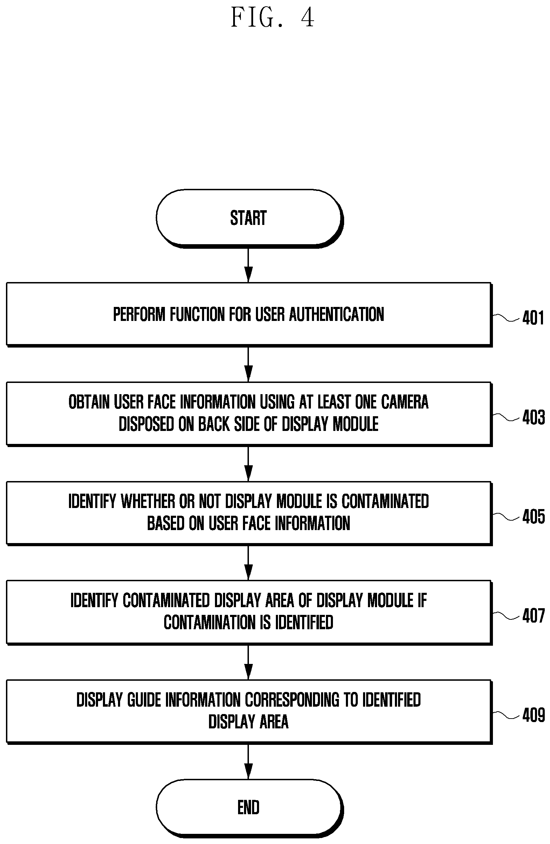

FIG. 4 is a flowchart 400 illustrating a method of displaying guide information on a display area of a display module according to various embodiments of the disclosure.

According to various embodiments, an electronic device (e.g., the electronic device 101 in FIG. 1 or the electronic device 200 in FIG. 2) may include a camera module (e.g., the camera module 180 in FIG. 1 or the under-display camera (UDC) 301 in FIG. 3) disposed on the back side of a display module (e.g., the display module 160 in FIG. 1). In response to performing a user authentication function, the electronic device 101 may obtain an image including a user face using the camera module 180 and produce a face template, based on the obtained image. According to an embodiment, a processor (e.g., the processor 120 in FIG. 1) of the electronic device 101, in response to performing of the user authentication function, may compare or analyze a face template corresponding to the at least one camera included in the camera module 180 and a reference template corresponding to the at least one camera, stored in the memory 130. According to an embodiment, the processor 120 may detect whether or not foreign substances exist in the display area corresponding to the lens position of the at least one camera through the comparison and analysis. In case that foreign substances exist in the display area, the processor 120 may display a user interface reflecting graphic effects (e.g., blur, shift, rotate, and twist) in the display area through the display module 160.

In operation 401, the processor 120 may perform a function for user authentication. For example, when attempting to unlock the lock screen of the electronic device 101, the processor 120 may perform a user authentication function, based on an application related to the lock screen. In the case where the display module 160 is activated and the lock screen is displayed, the processor 120 may perform the user authentication function to unlock the lock screen.

In operation 403, the processor 120 may obtain user face information using at least one camera (e.g., the camera module 180) disposed on the back side of the display module 160. For example, the processor 120 may activate at least one camera (e.g., a first camera) and capture at least one image including a user face. The processor 120 may extract face features from the at least one image and produce a face template, based on the extracted face features. According to an embodiment, user face information may include a face template. The processor 120 may produce multiple face templates when capturing multiple images using multiple cameras.

In operation 405, the processor 120 may identify whether or not the display module 160 is contaminated based on the user face information (e.g., the face template). For example, the processor 120 may compare a reference template (e.g., an existing face template for a user previously produced using the first camera) stored in the memory 130 with the produced face template. For example, the reference template and the face template, which are to be compared to each other, may be produced based on a face image captured using a camera (e.g., the first camera) having the same ID information. According to the comparison result, the processor 120 may identify whether or not the display area (e.g., the first display area) of the display module 160 corresponding to the lens position of at least one camera (e.g., the first camera) is contaminated. For example, in case that it is identified that no face feature is extracted from a partial area of the face template, based on the reference template, the processor 120 may determine that the display area is contaminated. For example, contamination may include foreign substances (e.g., dust), stains, and/or the user's fingerprint. According to another embodiment, the processor 120 may calculate the level of contamination according to the comparison result and determine whether or not there is contamination, based on the level of contamination. For example, contamination may mean that face features have not been extracted enough to perform the user authentication function.

In operation 407, the processor 120 may display guide information corresponding to the identified display area. For example, while a lock screen (e.g., the user interface) is being displayed through the display module 160, the processor 120 may apply graphic effects (e.g., blur, shift, rotate, and twist) to the image corresponding to the display area and display the same. As another example, the processor 120 may add and display other content such that the display area is overlaid with other content. According to an embodiment, guide information may include graphic effects and/or other content. According to an embodiment, the electronic device 101 may display guide information on the contaminated display area to remove the contamination. The electronic device 101 may display guide information to guide the user to swipe the contamination. According to an embodiment, the processor 120 may detect a user's touch input (e.g., a swipe input) onto the display area and perform the user authentication function again in response to the touch input.

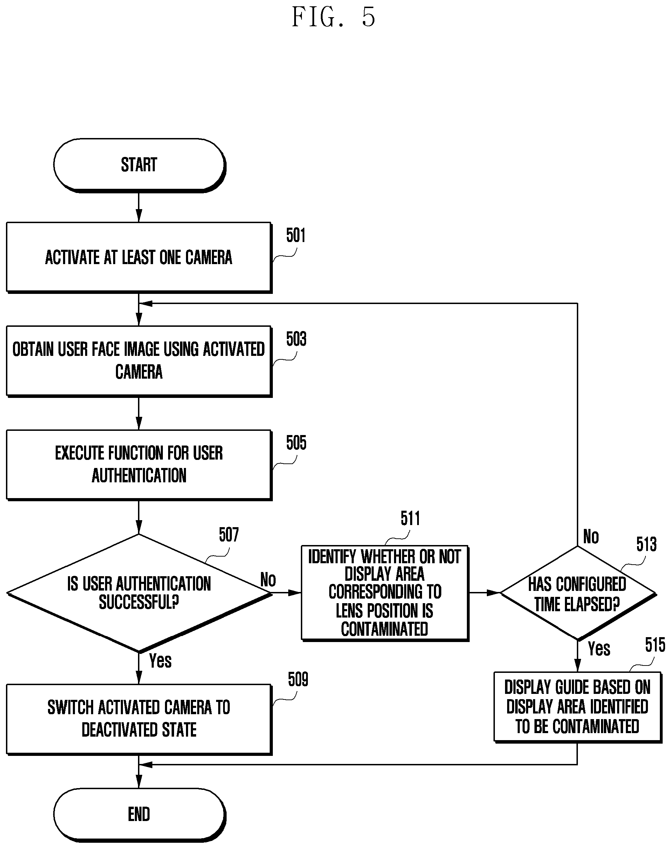

FIG. 5 is a flowchart illustrating a method of displaying a guide for the display area corresponding to the position of a camera lens according to various embodiments of the disclosure. FIG. 5 is a flowchart illustrating the operations in FIG. 4 in more detail.

According to various embodiments, an electronic device (e.g., the electronic device 101 in FIG. 1 or the electronic device 200 in FIG. 2) may include a camera module (e.g., the camera module 180 in FIG. 1 or the under-display camera (UDC) 301 in FIG. 3) disposed on the back side of a display module (e.g., the display module 160 in FIG. 1). When performing a user authentication function, a processor (e.g., the processor 120 in FIG. 1) of the electronic device 101 may identify whether or not user authentication is possible. For example, the processor 120 may identify whether or not face features are able to be extracted based on a user face image in the process of capturing the user face image using a camera for user authentication. For example, in case that contaminants (e.g., dust, foreign substances, or fingerprints) exist in the display area corresponding to the position of a camera lens, the processor 120 may have difficulty in extracting face features from the user face image. In case that contaminants exist in the display area, the electronic device 101 may intuitively provide guide information about the display area to the user so that the user may identify and remove the contaminants. For example, the processor 120 may apply graphic effects to the image in the display area through the display module 160.

In operation 501, the processor 120 may activate at least one camera (e.g., the first camera) to perform a user authentication function. For example, at least one camera may be disposed on the back side of the display module 160 and may be activated while a user interface (e.g., a lock screen) is displayed through the display module 160. The processor 120 may configure a partial area corresponding to the lens position of the first camera as a first display area and activate the first camera so as to photograph an external subject through the first display area.

In operation 503, the processor 120 may obtain a user face image using the activated camera (e.g., the first camera). For example, the processor 120 may photograph an external subject using the camera and obtain an image including a user face. The processor 120 may extract face features, based on the obtained user face image, and produce a face template, based on the extracted face features.

In operation 505, the processor 120 may execute a function for user authentication. For example, the processor 120 may compare a reference template stored in a memory (e.g., the memory 130 in FIG. 1) with the face template produced in operation 503, thereby performing user authentication. For example, the reference template and face template may be produced based on the images taken using the same camera.

In operation 507, the processor 120 may determine whether or not user authentication is successful. For example, the processor 120 may perform a function for user authentication, based on user authentication information (e.g., the user authentication information 311 in FIG. 3) stored in the memory 130 and identify whether or not user authentication is successful.

In case that user authentication is successful in operation 507, the processor 120 may switch the at least one activated camera to a deactivated state in operation 509. For example, in response to successful user authentication, the processor 120 may switch the at least one camera to a deactivated state while displaying a user interface through the display module 160.

In case that user authentication fails in operation 507, the processor 120 may identify whether or not the display area corresponding to at least one camera is contaminated in operation 511. According to an embodiment, the processor 120 may preferentially identify whether or not specific conditions (e.g., a condition in which no user's face moves and a condition of sufficient illumination) are met and secondarily identify whether or not the display area is contaminated.

For example, as the first of specific conditions, the processor 120 may identify whether or not the subject's (e.g., user's) face moves based on the obtained face image. The processor 120 may compare a plurality of images captured at regular time intervals to identify whether or not the subject's face moves and/or whether or not the camera moves. For example, the processor 120, based on coordinate information about the user's face (e.g., coordinate information about major parts of the face such as eyes, nose, mouth, etc.) included in a plurality of captured images, may identify whether or not the subject's (e.g., user's) face moves. For example, in case that the subject's face moves at a certain speed or higher, the image including the subject's face may blur due to the movement of the subject's face. According to an embodiment, the processor 120 may initially identify the state in which the subject's face does not move.

For example, as the second of the specific conditions, the processor 120 may identify whether or not sufficient lighting is provided to the user's face, based on the obtained face image. For example, in case that the surrounding lighting is not sufficient, the image quality of the face image may be degraded, so the image may blur due to the deterioration in image quality. According to an embodiment, the processor 120 may calculate an illumination value using an illuminance sensor (e.g., the sensor module 176 in FIG. 1) at the time of capturing the face image or calculate an illumination value, based on information (e.g., exposure, sensitivity, and brightness information) included in the face image. According to an embodiment, the processor 120 may identify whether or not sufficient lighting is provided to the face image, based on the calculated illumination value.

For example, specific conditions may be configured as shown in Table 1 below, and the processor 120 may initially identify whether or not the specific conditions are met.

**[Table 1]**

| |
|---|
| User authentication possible conditions (stable conditions) |
| 1. Movement of subject's face: None. |
| 2. Illumination condition (illumination value): Normal (e.g., low, normal, high, or a specific value) |

According to an embodiment, the processor 120 may identify specific conditions are met based on information related to the movement of the subject (e.g., the moving speed of the subject) and information about whether or not the user face is sufficiently illuminated (e.g., the illumination value). The processor 120 may identify whether or not the display area is contaminated in the state in which the specific conditions are met.

According to an embodiment, the processor 120 may identify the position of at least one camera (e.g., the first camera) that captured the user face image. For example, contamination in the display area may indicate that an area of the display module 160 corresponding to the lens position of the camera is contaminated. The processor 120 may identify coordinate information corresponding to the lens position of the first camera disposed on the back side of the display module 160. For example, the first camera may be disposed on the back side of the display module 160, and the lens of the first camera may be disposed so as to at least partially come into close contact with the display module 160. The first display area may include a partial display area of the display module 160 that at least partially corresponds to the lens position of the camera. For example, when photographing an external subject, the first camera may obtain an image including the subject by photographing the subject through the first display area. In operation 511, the processor 120 may identify whether or not the display area (e.g., the first display area) corresponding to the lens position of the camera (e.g., the first camera) is contaminated.

In operation 513, the processor 120 may identify whether or not a configured time has elapsed after the function for user authentication is executed. According to an embodiment, in a situation where user authentication fails in operation 507, the processor 120 may repeatedly re-perform the user authentication function for the configured time. In case that the configured time has not elapsed in operation 513, the processor 120 may return to operation 503, thereby obtaining a new face image and repeatedly performing the function for user authentication.

In case that the configured time has elapsed in operation 513, the processor 120 may display a guide in operation 515, based on the display area (e.g., the first display area) in which contamination was identified in operation 507. According to an embodiment, the processor 120 may identify that contaminants (e.g., dust, foreign substances, and/or fingerprints) exist in the first display area in the state in which specific conditions are met in operation 511, and apply visual effects to the first display area. According to an embodiment, the processor 120 may apply visual effects (e.g., graphic effects (e.g., blur, shift, rotate, and/or twist)) to the first display area such that the user may easily identify the first contaminated display area and remove the contaminants from the first display area. The processor 120 may display additional visual effects on the first display area such that the user may intuitively identify them.

According to an embodiment, the electronic device 101 may execute a function for user authentication using at least one camera disposed on the back side of the display module 160. In case that user authentication is successful, the electronic device 101 may switch the activated camera to a deactivated state. According to an embodiment, when user authentication fails, the electronic device 101 may identify whether or not the display area corresponding to the lens position of at least one camera is contaminated. For example, a partial display area of the display module 160 is likely to be contaminated due to frequent touch inputs onto the display module 160. In case that at least one camera is positioned on the back side of the contaminated display area, it may be difficult for the electronic device 101 to extract face features, based on the image including the user face. According to an embodiment, the electronic device 101 may identify whether or not the display area corresponding to the lens position of the camera is contaminated and, in case that the display area is contaminated, apply visual effects to the display area in order for the user to identify and remove contaminants (e.g., dust, foreign substances, and fingerprints) from the display area.

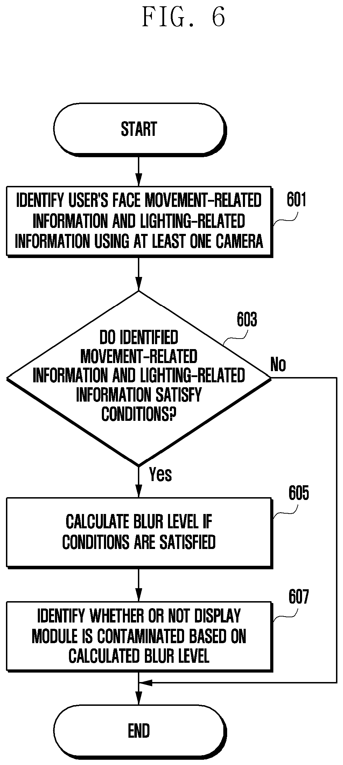

FIG. 6 is a flowchart illustrating a method of identifying contamination, based on the blur level of a display area, according to various embodiments of the disclosure. FIG. 6 is a flowchart illustrating operation 405 in FIG. 4 or operation 505 in FIG. 5 in more detail.

According to various embodiments, an electronic device (e.g., the electronic device 101 in FIG. 1 or the electronic device 200 in FIG. 2) may include a camera module (e.g., the camera module 180 in FIG. 1 or the under-display camera (UDC) 301 in FIG. 3) disposed on the back side of a display module (e.g., the display module 160 in FIG. 1). When performing a user authentication function, a processor (e.g., the processor 120 in FIG. 1) of the electronic device 101 may identify whether or not user authentication is possible. The processor 120 may preferentially identify whether or not specific conditions (e.g., a condition in which user's face does not move and a condition of sufficient illumination) are met and secondarily calculate a blur level (e.g., the degree of contamination) in the state in which the specific conditions are method. The processor 120 may identify whether or not the display module 160, corresponding to the lens position of the camera module 180, is contaminated based on the blur level.

In operation 601, the processor 120 may identify user's face movement-related information and lighting-related information using at least one camera (e.g., the camera module 180). For example, in the description of operation 505 in FIG. 5, the processor 120 may identify user's face movement-related information and lighting-related information in order to identify whether or not specific conditions (e.g., a condition in which user's face does not move and a condition of sufficient illumination) are met.

According to various embodiments, the electronic device 101 identify user's face movement-related information and lighting-related information in order to identify a blur caused by contamination of the display module 160, instead of a blur caused by the movement of a subject or a blur caused by low lighting.

For example, the processor 120 may compare a plurality of images including a user face to identify whether or not the user face moves. User's face movement-related information may include information related to the movement of the user's face included in the plurality of images. For example, the processor 120 may identify whether or not sufficient lighting is provided based on an image including a user face. Lighting-related information may include information related to the surrounding brightness on the user's face included in at least one image.

In operation 603, the processor 120 may identify whether or not the identified movement-related information and lighting-related information satisfy conditions. For example, the processor 120 may identify whether or not the user's face moves based on the identified movement-related information, and in case that the user's face does not move, the above conditions may be satisfied. For example, the processor 120 may identify whether or not sufficient lighting is provided to the user's face, based on the lighting-related information, and in case that sufficient lighting is provided, the above conditions may be satisfied. According to an embodiment, in case that a blur occurs even in the state in which the conditions are met in operation 603, the processor 120 may identify that the display module 160 is at least partially contaminated.

In case that the conditions are met in operation 603, the processor 120 may calculate a blur level (e.g., a blur index) in operation 605. For example, the processor 120 may calculate the blur level, based on a machine-learning method or an image analysis method. The machine-learning method may be a method of accumulating blur-related data about the user's face in advance and calculating a relative blur level for an image including a user's face, based on the accumulated blur-related data. The image analysis method may be a method of analyzing an obtained face image, thereby calculating the blur level. According to an embodiment, the electronic device 101 may compare and analyze a reference template stored in the memory 130 and a face template for the captured image sin order to perform the user authentication function. In operation 605, the processor 120 may calculate the blur level, based on the reference template and the face template.

For example, the processor 120 may compare the blur level (e.g., a blur ratio) between the face template and the reference template and, in case that the comparison value (e.g., a value of BIᵥₑ/BIₑₙ) does not exceed a configured threshold (e.g., a value TH_{blur}), determine that user authentication is possible. It is possible to determine whether or not user authentication is possible using Equation 1 below. ${Ratio}_{blur} = \frac{{BI}_{νe}}{{BI}_{en}} > {TH}_{blur}$

Referring to Equation 1, BIᵥₑ is a value representing the blur level (blur index) for the face template, and BIₑₙ is a value representing the blur level for the reference template. TH_{blur} may be a threshold corresponding to a reference value for determining whether or not user authentication is possible. According to an embodiment, the threshold may be configured variously depending on time (e.g., morning/afternoon), location (e.g., indoor/outdoor), and/or specific situation (e.g., season).

In operation 607, the processor 120 may identify whether or not the display module 160 is contaminated based on the calculated blur level. For example, in case that the calculated blur level exceeds a configured threshold, the face template may be contaminated too much to perform the user authentication function. For example, in case that the calculated blur level does not exceed a configured threshold, the face template may perform the user authentication function.

According to an embodiment, in case that the calculated blur level exceeds a configured threshold (e.g., in the case where a partial display area corresponding to the camera lens is contaminated in the display module 160), the electronic device 101 may apply graphic effects, based on the partial display area of the display module 160. The electronic device 101 may display graphic effects on the partial display area such that the contaminants may be removed from the display module 160 by the user.

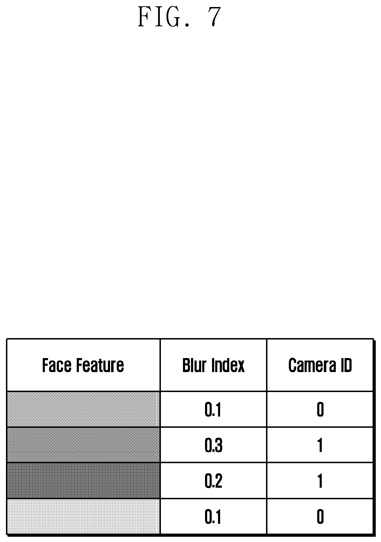

FIG. 7 is a diagram illustrating an example of a table for determining the blur level according to various embodiments of the disclosure.

According to an embodiment, an electronic device (e.g., the electronic device 101 in FIG. 1 or the electronic device 200 in FIG. 2) may store a reference template including user's face features in a memory (e.g., the memory 130 in FIG. 1). For example, the reference template may be stored in the memory 130 in the form of a database (DB). According to an embodiment, the electronic device 101 may have at least one camera (e.g., the UDC) disposed on the back side of a display module (e.g., the display module 160 in FIG. 1) and may capture a user face image using the at least one camera. The processor 120 may implement a reference template, based on the captured face image, and store the reference template in the memory 130.

In case that there is a plurality of cameras, IDs may be respectively assigned to the cameras. The processor 120 may calculate a blur level, based on the reference template and record the same in a database (DB), and may update the record at the time at which the face image is obtained. According to an embodiment, when determining the blur level, the electronic device 101 may compare templates (e.g., the reference template and the face template) corresponding to a camera having the same ID. For example, the electronic device 101 may extract user's face features, based on an image captured using the camera, and calculate the blur level corresponding to the face features.

Referring to FIG. 7, the processor 120 may store at least one piece of camera ID information, the blur level for a reference template, and reference template-related information (e.g., user's face features) as a database (DB) in the memory 130. The processor 120 may utilize the database information of the reference template stored in the memory 130 when calculating the blur level for the face image. For example, the blur level (blur index) registered in the table in FIG. 7 may include the average or maximum value of reference templates. For example, in case that the blur level registered in the table in FIG. 7 is exceeded, it may be identified that the corresponding face image is contaminated too much to perform the user authentication function.

According to an embodiment, the processor 120 may calculate a first blur value corresponding to the reference template and calculate a second blur value corresponding to the face template. For example, the reference template and the face template may be implemented based on a face image obtained using a camera with the same ID. The processor 120 may calculate a blur ratio, based on the first blur value and the second blur value, and identify whether or not the blur ratio exceeds a configured threshold. For example, when in case that the blur ratio exceeds a configured threshold, the processor 120 may identify that the display area corresponding to at least one camera is contaminated. In case that the blur ratio exceeds a configured threshold, the user face image obtained using at least one camera may include an image that is contaminated too much to perform the user authentication function.

According to an embodiment, in case that the display area is identified as being contaminated, the processor 120 may provide feedback information about the contamination to a user authentication application and display guide information about the display area. According to an embodiment, the feedback information may include a blur value or blur ratio calculated based on the corresponding face image or include a level value (high/middle/low) based on the blur ratio. According to an embodiment, the processor 120 may display guide information differently, based on a level value based on the blur ratio. For example, in case that the level value is small (e.g., in the case of low contamination), the guide information may be displayed to be smaller, and in case that the level value is large (e.g., in the case of high contamination), the guide information may be displayed to be larger.

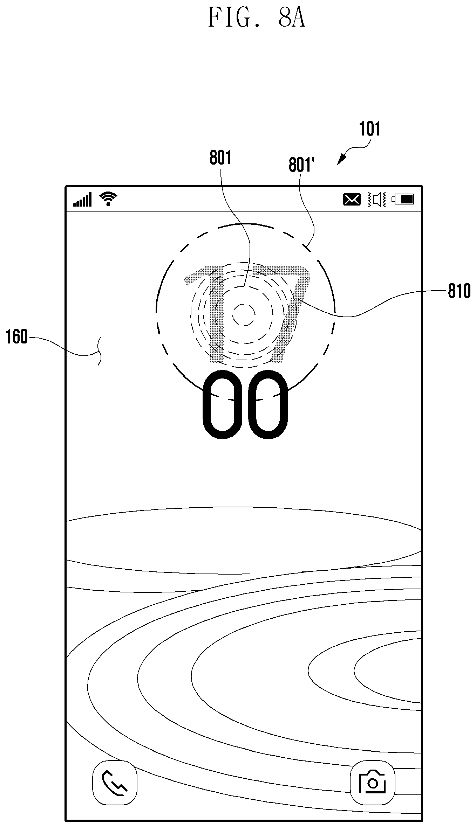

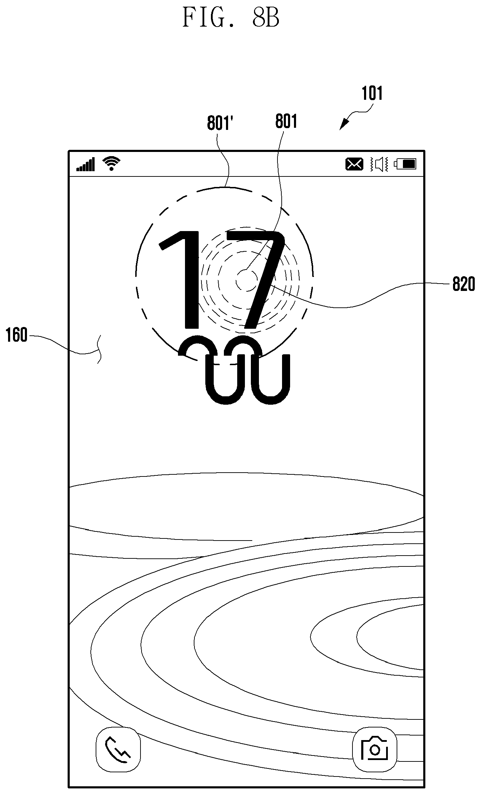

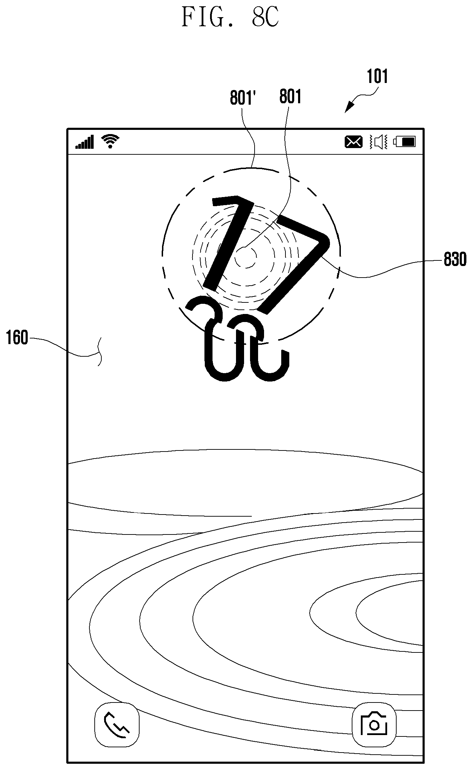

FIG. 8A is a diagram illustrating an example of a user interface reflecting a blur effect in the display area according to various embodiments of the disclosure. FIG. 8B is a diagram illustrating an example of a user interface reflecting a shift effect in the display area according to various embodiments of the disclosure. FIG. 8C is a diagram illustrating an example of a user interface reflecting a rotate effect in the display area according to various embodiments of the disclosure.

According to an embodiment, an electronic device (e.g., the electronic device 101 in FIG. 1 or the electronic device 200 in FIG. 2) may identify that there are contaminants (e.g., dust, foreign substances, and fingerprints) in the display area of a display module (e.g., the display module 160 in FIG. 1). A processor (e.g., the processor 120 in FIG. 1) of the electronic device 101 may apply graphic effects to the display area and display the same, thereby intuitively informing the user that the display area is contaminated. The electronic device 101 may guide the user to remove the contaminants from the display area.

According to an embodiment, the processor 120 may calculate a blur level (blur index) for the contaminated display area and, based on the blur level, apply graphic effects (e.g., blur, shift, rotate, or twist). For example, the graphic effects may be effects of at least partially modifying at least one piece of content displayed on the display area and displaying the same. As the degree of contamination (e.g., the blur level) increases, the processor 120 may apply the graphic effects to be larger and in the wider range.

Referring to FIG. 8A, an embodiment in which a blur effect is applied to at least one piece of content included in the display area is shown. For example, the processor 120 may apply a blur effect corresponding to the degree of contamination. The processor 120 of the electronic device 101 may identify that a first display area 801' of the display module 160 is contaminated. For example, a first camera 801 may be disposed on the back side of the display module 160, and the first display area 801' may be configured to correspond to the lens position of the first camera 801. The electronic device 101 may be in the state of displaying a user interface through the display module 160. The processor 120 may apply a blur effect 810 to the first display area 801' and display the same in order to remove the contaminants from the first display area 801'. For example, the processor 120 may at least partially modify the user interface to reflect the blur effect 810 for some content corresponding to the first display area 801', based on the user interface being displayed. According to an embodiment, the electronic device 101 may at least partially modify and display a part of the user interface corresponding to the first display area 801' so that the user may intuitively identify that the first display area 801' is contaminated.

Referring to FIG. 8B, an embodiment in which a shift effect is applied to at least one piece of content included in the display area is shown. For example, the processor 120 may display the shift distance of at least one piece of content to increase as the degree of contamination increases. The processor 120 of the electronic device 101 may identify that the first display area 801' of the display module 160 is contaminated, and may apply a shift effect 820 to the first display area 801' and display the same in order to remove contaminants from the first display area 801'. For example, the processor 120 may at least partially modify the user interface such that some content corresponding to the first display area 801' shifts in a configured direction (e.g., left, right, up, or down), based on the user interface being displayed. The processor 120 may configure the distance by which some content shifts to be different, based on the degree of contamination of the first display area 801'. For example, as the degree of contamination increases, the distance by which some content shifts may increase.

Referring to FIG. 8C, an embodiment in which a rotate effect is applied to at least one piece of content included in the display area is shown. For example, the processor 120 may display such that the rotational radius of at least one piece of content increases as the degree of contamination increases. The processor 120 of the electronic device 101 may identify that the first display area 801' of the display module 160 is contaminated, and may apply a rotate effect 830 to the first display area 801' and display the same in order to remove contaminants from the first display area 801'. For example, the processor 120 may at least partially modify the user interface such that some content corresponding to the first display area 801' rotates in a configured direction (e.g., a clockwise or counterclockwise direction), based on the user interface being displayed. The processor 120 may configure the rotation angle of some content to be different, based on the degree of contamination of the first display area 801'. For example, as the degree of contamination increases, the rotation angle of some content may increase.

According to an embodiment, the electronic device 101 may intuitively apply graphic effects to the display area (e.g., first display area 801') corresponding to the position of the camera lens and guide the user to remove contaminants from the display area.

According to another embodiment, the electronic device 101 may detect a user's touch input (e.g., a touch input to remove contaminants) onto the first display area 801', and may restore the user interface corresponding to the first display area 801' to its original state in response to the detection of the touch input and display the same. For example, the processor 120 may remove a graphic effect applied to the partial area of the user interface and restore the user interface to the one before the graphic effect is applied. According to another embodiment, the electronic device 101 may continue to identify whether or not the first display area 801' is contaminated and, in case that contamination is identified, apply and display graphic effects, based on the first display area 801'.

A method according to various embodiments may include executing a function for user authentication, activating at least one camera (e.g., the camera module 180 in FIG. 1) disposed on the back side of a display module (e.g., the display module 160 in FIG. 1) in response to the execution, identifying whether or not a display area of the display module 160 corresponding to a position of the at least one camera 180 is contaminated, and displaying guide information corresponding to the display area in case that contamination of the display area is identified.

The method according to an embodiment may further include identifying a lens position of a first camera, based on camera position information (e.g., the camera position information 312 in FIG. 3) stored in a memory (e.g., the memory 130 in FIG. 1), identifying a first display area of the display module 160 corresponding to the lens position of the first camera, and identifying whether or not the first display area is contaminated.

The method according to an embodiment may further include obtaining an image including a user face using the at least one camera 180, extracting at least one face feature, based on the obtained image, and producing at least one template, based on the at least one extracted face feature.

The executing of the function for user authentication according to an embodiment may include executing the function for user authentication in the state in which a reference template produced based on a first image including the user face is stored in the memory 130, obtaining a second image including the user face in response to the execution, extracting at least one face feature, based on the obtained second image, producing a face template, based on the at least one extracted face feature, and executing the function for user authentication, based on the reference template and the face template.

The method according to an embodiment may further include calculating a first blur value corresponding to the reference template, calculating a second blur value corresponding to the face template, calculating a blur ratio, based on the first blur value and the second blur value, and identifying that the display area is contaminated in case that the blur ratio exceeds a configured threshold.

The method according to an embodiment may further include identifying whether or not the user face moves or calculating an illumination value for the user face, based on the second image, and executing the function for user authentication, based on the reference template and the face template, in case that the user face does not move or in case that the illumination value exceeds a threshold.

The method according to an embodiment may further include, in case that contamination of the display area is identified, performing at least one of modifying the at least one piece of content included in the display area by applying a blur effect thereto, displaying the at least one piece of content by at least partially shifting the same, and displaying the at least one piece of content by at least partially rotating the same.

The method according to an embodiment may further include identifying the degree of contamination of the display area in case that contamination of the display area is identified, and determining the degree of applying the graphic effects, based on the identified degree of contamination.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 200) comprising:
a display module (160);
at least one camera (201, 202, 203, 204, 301) disposed on the back side of the display module and configured to at least partially photograph an external subject through the display module;
memory (130); and
a processor (120) operatively connected to the display module, the at least one camera, and the memory,
wherein the memory store instructions that, when executed by the processor, cause the electronic device to:
obtain, in response to executing a function of user authentication, a second image comprising a user face using the at least one camera;
calculate a blur ratio based on the second image and a first image including at least one face feature extracted based on the user face stored in the memory;
identify that a first display area of the display module corresponding to a position of the at least one camera used to obtain the second image is contaminated, in case that the blur ratio exceeds a configured threshold; and
display a graphic effect on the contaminated first display area based on a user interface displayed via the display module.

2. The electronic device (101, 200) of claim 1, wherein the processor (120) is configured to:
identify a lens position of a first camera included in the at least one camera (201, 202, 203, 204, 301), based on camera position information stored in the memory;
identify the first display area of the display module (160) corresponding to the lens position of the first camera; and
identify that the first display area is contaminated.

3. The electronic device (101, 200) of claim 1, wherein the processor (120) is configured to:
obtain the first image comprising the user face using the at least one camera (201, 202, 203, 204, 301);
extract at least one face feature, based on the obtained first image; and
produce at least one face template, based on the at least one face feature.

4. The electronic device (101, 200) of claim 3, wherein the processor (120) is configured to:
execute the function for user authentication in the state in which a reference template produced based on the first image comprising the user face is stored in the memory;
obtain the second image comprising the user face in response to executing the function of user authentication;
extract at least one face feature, based on the obtained second image;
produce a face template, based on the extracted at least one face feature; and
execute the function for user authentication, based on the reference template and the face template.

5. The electronic device (101, 200) of claim 4, wherein the processor (120) is configured to:
calculate a first blur value corresponding to the reference template;
calculate a second blur value corresponding to the face template;
calculate the blur ratio, based on the first blur value and the second blur value; and
identify that the first display area is contaminated in case that the blur ratio exceeds the configured threshold.

6. The electronic device (101, 200) of claim 4, wherein the processor (120) is configured to:
identify whether or not the user face moves or calculate an illumination value for the user face, based on the second image; and
identify whether or not the first display area is contaminated based on the reference template and the face template in case that the user face does not move or in case that the illumination value exceeds a threshold.

7. The electronic device (101, 200) of claim 1, wherein the processor (120) is configured to apply the graphic effects to at least one piece of content corresponding to the first display area based on the user interface in case that contamination of the first display area is identified.

8. The electronic device (101, 200) of claim 7, wherein the processor (120) is configured to:
modify the at least one piece of content by applying a blur effect thereto;
display the at least one piece of content by at least partially shifting the same; or
display the at least one piece of content by at least partially rotating the same.

9. The electronic device (101, 200) of claim 8, wherein the processor (120) is configured to:
determine the degree of applying the graphic effects, based on the calculated blur ratio.

10. The electronic device (101, 200) of claim 1, wherein the processor (120) is configured to:
detect a user's touch input onto the guide information displayed on the first display area; and
remove the guide information from the first display area in response to the detection.

11. The electronic device (101, 200) of claim 1, wherein the processor (120) is configured to:
obtain an image through the first display area of the display module using the at least one activated camera (201, 202, 203, 204, 301); and
identify whether or not the first display area is contaminated by calculating a blur level of the obtained image.

12. A method comprising:
obtaining, in response to executing a function for user authentication a second image comprising a user face using at least one camera (201, 202, 203, 204, 301), the at least one camera being disposed on the back side of a display module (160) and configured to at least partially photograph an external subject through the display module;
calculating a blur ratio based on the second image and a first image including at least one face feature extracted based on the user face stored in memory (130);
identifying that a first display area of the display module corresponding to a position of the at least one camera used to obtain the second image is contaminated, in case that the blur ratio exceeds a configured threshold; and
displaying a graphic effect on the contaminated first display area based on a user interface displayed via the display module.

13. The method of claim 12, further comprising:
identifying a lens position of a first camera, based on camera position information stored in a memory;
identifying the first display area of the display module (160) corresponding to the lens position of the first camera; and
identifying whether or not the first display area is contaminated.

14. The method of claim 12, further comprising, in case that contamination of the display area is identified, performing at least one of:
modifying the at least one piece of content included in the display area by applying a blur effect thereto;
displaying the at least one piece of content by at least partially shifting the same; and
displaying the at least one piece of content by at least partially rotating the same.

## Patentansprüche

1. Elektronische Vorrichtung (101, 200), umfassend:
ein Anzeigemodul (160);
zumindest eine Kamera (201, 202, 203, 204, 301), die auf der Rückseite des Anzeigemoduls angeordnet und dazu konfiguriert ist, ein externes Motiv durch das Anzeigemodul zumindest teilweise zu fotografieren;
Speicher (130); und
einen Prozessor (120), der mit dem Anzeigemodul, der zumindest einen Kamera und dem Speicher wirkverbunden ist,
wobei der Speicher Anweisungen speichert, die, wenn durch den Prozessor ausgeführt, die elektronische Vorrichtung zu Folgendem veranlassen:
Erhalten, als Reaktion auf das Ausführen einer Funktion der Benutzerauthentifizierung, eines zweiten Bildes, das ein Benutzergesicht umfasst, unter Verwendung der zumindest einen Kamera;
Berechnen eines Unschärfeverhältnisses basierend darauf, dass das zweite Bild und ein erstes Bild zumindest ein Gesichtsmerkmal beinhalten, das basierend auf dem Benutzergesicht, das in dem Speicher gespeichert ist, extrahiert wird;
Identifizieren, dass ein erster Anzeigebereich des Anzeigemoduls entsprechend einer Position der zumindest einen Kamera, die verwendet wird, um das zweite Bild zu erhalten, kontaminiert ist, falls das Unschärfeverhältnis einen konfigurierten Schwellenwert überschreitet; und
Anzeigen eines grafischen Effekts auf dem kontaminierten ersten Anzeigebereich basierend auf einer Benutzerschnittstelle, die über das Anzeigemodul angezeigt wird.

2. Elektronische Vorrichtung (101, 200) nach Anspruch 1, wobei der Prozessor (120) zu Folgendem konfiguriert ist:
Identifizieren einer Linsenposition einer ersten Kamera, die in der zumindest einen Kamera (201, 202, 203, 204, 301) enthalten ist, basierend auf Kamerapositionsinformationen, die in dem Speicher gespeichert sind;
Identifizieren des ersten Anzeigebereichs des Anzeigemoduls (160) entsprechend der Linsenposition der ersten Kamera; und
Identifizieren, dass der erste Anzeigebereich kontaminiert ist.

3. Elektronische Vorrichtung (101, 200) nach Anspruch 1, wobei der Prozessor (120) zu Folgendem konfiguriert ist:
Erhalten des ersten Bildes, welches das Benutzergesicht umfasst, unter Verwendung der zumindest einen Kamera (201, 202, 203, 204, 301);
Extrahieren von zumindest einem Gesichtsmerkmal basierend auf dem erhaltenen ersten Bild; und
Produzieren von zumindest einer Gesichtsvorlage basierend auf dem zumindest einen Gesichtsmerkmal.

4. Elektronische Vorrichtung (101, 200) nach Anspruch 3, wobei der Prozessor (120) zu Folgendem konfiguriert ist:
Ausführen der Funktion zur Benutzerauthentifizierung in dem Zustand, in dem eine Referenzvorlage, die basierend auf dem ersten Bild, welches das Benutzergesicht umfasst, produziert wird, in dem Speicher gespeichert ist;
Erhalten des zweiten Bildes, welches das Benutzergesicht umfasst, als Reaktion auf das Ausführen der Funktion der Benutzerauthentifizierung;
Extrahieren von zumindest einem Gesichtsmerkmal basierend auf dem erhaltenen zweiten Bild;
Produzieren einer Gesichtsvorlage basierend auf dem extrahierten zumindest einen Gesichtsmerkmal; und
Ausführen der Funktion zur Benutzerauthentifizierung basierend auf der Referenzvorlage und der Gesichtsvorlage.

5. Elektronische Vorrichtung (101, 200) nach Anspruch 4, wobei der Prozessor (120) zu Folgendem konfiguriert ist:
Berechnen eines ersten Unschärfewertes entsprechend der Referenzvorlage;
Berechnen eines zweiten Unschärfewertes entsprechend der Gesichtsvorlage;
Berechnen des Unschärfeverhältnisses basierend auf dem ersten Unschärfewert und dem zweiten Unschärfewert; und
Identifizieren, dass der erste Anzeigebereich kontaminiert ist, falls das Unschärfeverhältnis den konfigurierten Schwellenwert überschreitet.

6. Elektronische Vorrichtung (101, 200) nach Anspruch 4, wobei der Prozessor (120) zu Folgendem konfiguriert ist:
Identifizieren, ob sich das Benutzergesicht bewegt oder nicht, oder Berechnen eines Beleuchtungswertes für das Benutzergesicht basierend auf dem zweiten Bild; und
Identifizieren, ob der erste Anzeigebereich kontaminiert ist oder nicht, basierend auf der Referenzvorlage und der Gesichtsvorlage, falls sich das Benutzergesicht nicht bewegt oder falls der Beleuchtungswert einen Schwellenwert überschreitet.

7. Elektronische Vorrichtung (101, 200) nach Anspruch 1, wobei der Prozessor (120) dazu konfiguriert ist, die grafischen Effekte auf zumindest ein Inhaltsstück entsprechend dem ersten Anzeigebereich basierend auf der Benutzerschnittstelle anzuwenden, falls Kontamination des ersten Anzeigebereichs identifiziert wird.

8. Elektronische Vorrichtung (101, 200) nach Anspruch 7, wobei der Prozessor (120) zu Folgendem konfiguriert ist:
Modifizieren des zumindest einen Inhaltsstücks durch Anwenden eines Unschärfeeffekts darauf;
Anzeigen des zumindest einen Inhaltsstücks durch zumindest teilweises Verschieben desselben;
oder
Anzeigen des zumindest einen Inhaltsstücks durch zumindest teilweises Drehen desselben.

9. Elektronische Vorrichtung (101, 200) nach Anspruch 8, wobei der Prozessor (120) zu Folgendem konfiguriert ist:
Bestimmen des Grads des Anwendens der grafischen Effekte basierend auf dem berechneten Unschärfeverhältnis.

10. Elektronische Vorrichtung (101, 200) nach Anspruch 1, wobei der Prozessor (120) zu Folgendem konfiguriert ist:
Detektieren einer Berührungseingabe eines Benutzers auf den Führungsinformationen, die auf dem ersten Anzeigebereich angezeigt werden; und
Entfernen der Führungsinformationen von dem ersten Anzeigebereich als Reaktion auf die Detektion.

11. Elektronische Vorrichtung (101, 200) nach Anspruch 1, wobei der Prozessor (120) zu Folgendem konfiguriert ist:
Erhalten eines Bildes durch den ersten Anzeigebereich des Anzeigemoduls unter Verwendung der zumindest einen aktivierten Kamera (201, 202, 203, 204, 301); und
Identifizieren, ob der erste Anzeigebereich kontaminiert ist oder nicht, durch Berechnen eines Unschärfeniveaus des erhaltenen Bildes.

12. Verfahren, umfassend:
Erhalten, als Reaktion auf das Ausführen einer Funktion zur Benutzerauthentifizierung, eines zweiten Bildes, das ein Benutzergesicht umfasst, unter Verwendung von zumindest einer Kamera (201, 202, 203, 204, 301), wobei die zumindest eine Kamera auf der Rückseite eines Anzeigemoduls (160) angeordnet und dazu konfiguriert ist, ein externes Motiv durch das Anzeigemodul zumindest teilweise zu fotografieren;
Berechnen eines Unschärfeverhältnisses basierend darauf, dass das zweite Bild und ein erstes Bild zumindest ein Gesichtsmerkmal beinhalten, das basierend auf dem Benutzergesicht, das in dem Speicher (130) gespeichert ist, extrahiert wird;
Identifizieren, dass ein erster Anzeigebereich des Anzeigemoduls entsprechend einer Position der zumindest einen Kamera, die verwendet wird, um das zweite Bild zu erhalten, kontaminiert ist, falls das Unschärfeverhältnis einen konfigurierten Schwellenwert überschreitet; und
Anzeigen eines grafischen Effekts auf dem kontaminierten ersten Anzeigebereich basierend auf einer Benutzerschnittstelle, die über das Anzeigemodul angezeigt wird.

13. Verfahren nach Anspruch 12, ferner umfassend:
Identifizieren einer Linsenposition einer ersten Kamera basierend auf Kamerapositionsinformationen, die in einem Speicher gespeichert sind;
Identifizieren des ersten Anzeigebereichs des Anzeigemoduls (160) entsprechend der Linsenposition der ersten Kamera; und
Identifizieren, ob der erste Anzeigebereich kontaminiert ist oder nicht.

14. Verfahren nach Anspruch 12, ferner umfassend, falls Kontamination des Anzeigebereichs identifiziert wird, Durchführen von zumindest einem von Folgendem:
Modifizieren des zumindest einen Inhaltsstücks, das in dem Anzeigebereich enthalten ist, durch Anwenden eines Unschärfeeffekts darauf;
Anzeigen des zumindest einen Inhaltsstücks durch zumindest teilweises Verschieben desselben; und
Anzeigen des zumindest einen Inhaltsstücks durch zumindest teilweises Drehen desselben.

## Revendications

1. Dispositif électronique (101, 200) comprenant :
un module d'affichage (160) ;
au moins une caméra (201, 202, 203, 204, 301) disposée sur le côté arrière du module d'affichage et configurée pour photographier au moins partiellement un sujet externe à travers le module d'affichage ;
une mémoire (130) ; et
un processeur (120) connecté fonctionnellement au module d'affichage, à l'au moins une caméra et à la mémoire,
ladite mémoire stockant des instructions qui, lorsqu'elles sont exécutées par le processeur, amènent le dispositif électronique à :
obtenir, en réponse à l'exécution d'une fonction d'authentification d'utilisateur, une seconde image comprenant un visage d'utilisateur à l'aide de l'au moins une caméra ;
calculer un rapport de flou sur la base de la seconde image et d'une première image comprenant au moins une caractéristique de visage extraite sur la base du visage d'utilisateur stocké dans la mémoire ;
identifier qu'une première zone d'affichage du module d'affichage correspondant à une position de l'au moins une caméra utilisée pour obtenir la seconde image est contaminée, dans le cas où le rapport de flou dépasse un seuil configuré ; et
afficher un effet graphique sur la première zone d'affichage contaminée sur la base d'une interface utilisateur affichée par l'intermédiaire du module d'affichage.

2. Dispositif électronique (101, 200) de la revendication 1, ledit processeur (120) étant configuré pour :
identifier une position d'objectif d'une première caméra comprise dans l'au moins une caméra (201, 202, 203, 204, 301), sur la base d'informations de position de caméra stockées dans la mémoire ;
identifier la première zone d'affichage du module d'affichage (160) correspondant à la position de l'objectif de la première caméra ; et
identifier que la première zone d'affichage est contaminée.

3. Dispositif électronique (101, 200) de la revendication 1, ledit processeur (120) étant configuré pour :
obtenir la première image comprenant le visage d'utilisateur à l'aide de l'au moins une caméra (201, 202, 203, 204, 301) ;
extraire au moins une caractéristique de visage, sur la base de la première image obtenue ; et
produire au moins un modèle de visage, sur la base de ladite au moins une caractéristique de visage.

4. Dispositif électronique (101, 200) de la revendication 3, ledit processeur (120) étant configuré pour :
exécuter la fonction pour l'authentification d'utilisateur dans l'état dans lequel un modèle de référence produit sur la base de la première image comprenant le visage d'utilisateur est stocké dans la mémoire ;
obtenir la seconde image comprenant le visage d'utilisateur en réponse à l'exécution de la fonction d'authentification d'utilisateur ;
extraire au moins une caractéristique de visage, sur la base de la seconde image obtenue ;
produire un modèle de visage, sur la base de l'au moins une caractéristique de visage extraite ; et exécuter la fonction pour l'authentification d'utilisateur, sur la base du modèle de référence et du modèle de visage.

5. Dispositif électronique (101, 200) de la revendication 4, ledit processeur (120) étant configuré pour :
calculer une première valeur de flou correspondant au modèle de référence ;
calculer une seconde valeur de flou correspondant au modèle de visage ;
calculer le rapport de flou, sur la base de la première valeur de flou et de la seconde valeur de flou ; et
identifier que la première zone d'affichage est contaminée dans le cas où le rapport de flou dépasse le seuil configuré.

6. Dispositif électronique (101, 200) de la revendication 4, ledit processeur (120) étant configuré pour :
identifier si le visage de l'utilisateur se déplace ou non ou calculer une valeur d'éclairage pour le visage d'utilisateur, sur la base de la seconde image ; et
identifier si la première zone d'affichage est contaminée ou non sur la base du modèle de référence et du modèle de visage dans le cas où le visage d'utilisateur ne bouge pas ou dans le cas où la valeur d'éclairage dépasse un seuil.

7. Dispositif électronique (101, 200) de la revendication 1, ledit processeur (120) étant configuré pour appliquer les effets graphiques à au moins un élément de contenu correspondant à la première zone d'affichage sur la base de l'interface utilisateur dans le cas où la contamination de la première zone d'affichage est identifiée.

8. Dispositif électronique (101, 200) de la revendication 7, ledit processeur (120) étant configuré pour :
modifier l'au moins un élément de contenu en lui appliquant un effet de flou ;
afficher l'au moins un élément de contenu en le déplaçant au moins partiellement ;
ou
afficher l'au moins un élément de contenu en le faisant tourner au moins partiellement.

9. Dispositif électronique (101, 200) de la revendication 8, ledit processeur (120) étant configuré pour :
déterminer le degré d'application des effets graphiques, sur la base du rapport de flou calculé.

10. Dispositif électronique (101, 200) de la revendication 1, ledit processeur (120) étant configuré pour :
détecter l'entrée tactile de l'utilisateur sur les informations de guidage affichées sur la première zone d'affichage ; et
supprimer les informations de guidage de la première zone d'affichage en réponse à la détection.

11. Dispositif électronique (101, 200) de la revendication 1, ledit processeur (120) étant configuré pour :
obtenir une image à travers la première zone d'affichage du module d'affichage à l'aide de l'au moins une caméra activée (201, 202, 203, 204, 301) ; et
identifier si la première zone d'affichage est contaminée ou non en calculant un niveau de flou de l'image obtenue.

12. Procédé comprenant :
l'obtention, en réponse à l'exécution d'une fonction pour l'authentification d'utilisateur, d'une seconde image comprenant un visage d'utilisateur à l'aide d'au moins une caméra (201, 202, 203, 204, 301), l'au moins une caméra étant disposée sur le côté arrière d'un module d'affichage (160) et configurée pour photographier au moins partiellement un sujet externe à travers le module d'affichage ;
le calcul d'un rapport de flou sur la base de la seconde image et d'une première image comprenant au moins une caractéristique de visage extraite sur la base du visage d'utilisateur stocké en mémoire (130) ;
l'identification qu'une première zone d'affichage du module d'affichage correspondant à une position de l'au moins une caméra utilisée pour obtenir la seconde image est contaminée, dans le cas où le rapport de flou dépasse un seuil configuré ; et
l'affichage d'un effet graphique sur la première zone d'affichage contaminée sur la base d'une interface utilisateur affichée par l'intermédiaire du module d'affichage.

13. Procédé de la revendication 12, comprenant en outre :
l'identification d'une position d'objectif d'une première caméra, sur la base d'informations de position de caméra stockées dans une mémoire ;
l'identification de la première zone d'affichage du module d'affichage (160) correspondant à la position de l'objectif de la première caméra ; et
l'identification pour savoir si la première zone d'affichage est contaminée ou non.

14. Procédé de la revendication 12, comprenant en outre, dans le cas où la contamination de la zone d'affichage est identifiée, la réalisation d'au moins un parmi :
la modification de l'au moins un élément de contenu compris dans la zone d'affichage en lui appliquant un effet de flou ;
l'affichage de l'au moins un élément de contenu en le déplaçant au moins partiellement ; et
l'affichage de l'au moins un élément de contenu en le faisant tourner au moins partiellement.
